# EUROPÄISCHE PATENTSCHRIFT

(11) **EP 2 178 388 B1**
(45) Veröffentlichungstag und Bekanntmachung des Hinweises auf die Patenterteilung: **30.03.2011**
(21) Anmeldenummer: 08758986.7
(22) Anmeldetag: 03.06.2008
(51) Int. Cl.: A23F 5/40

(54) **INSTANT-KAFFEEZUBEREITUNG MIT VERBESSERTER SCHAUMBILDUNG**
INSTANT COFFEE PREPARATION HAVING IMPROVED FOAM FORMATION
PRÉPARATION POUR CAFÉ INSTANTANÉ À FORMATION DE MOUSSE AMÉLIORÉE

(30) Priorität: 20.08.2007 DE 102007039322
(43) Veröffentlichungstag der Anmeldung: 28.04.2010
(73) Patentinhaber: Krüger GmbH & Co. KG, 51469 Bergisch-Gladbach (DE)
(72) Erfinder: KRÜGER, Willibert, 51467 Bergisch Gladbach (DE)
(74) Vertreter: Gesthuysen, von Rohr & Eggert
(86) Internationale Anmeldenummer: PCT/EP2008/004425
(87) Internationale Veröffentlichungsnummer: WO 2009/024200

(56) Entgegenhaltungen:
- EP-A- 1 785 369
- WO-A-96/08153
- WO-A-98/34495
- WO-A-2005/122780
- DE-A1- 19 623 296

## Beschreibung

Die vorliegende Erfindung betrifft das Gebiet der Instant-Getränke, insbesondere kaffeehaltiger Instant-Getränke.

Insbesondere betrifft die vorliegende Erfindung eine Instant-Kaffeezubereitung mit verbesserter Schaumbildung und ein Verfahren zu ihrer Herstellung sowie deren Verwendung.

Genauer gesagt betrifft die vorliegende Erfindung eine Zusammensetzung, welche sich zur Aufbereitung eines kaffeehaltigen Instant-Heißgetränks, vorzugsweise in der Art eines Cappuccino-Getränks, eignet, sowie ein Verfahren zu ihrer Herstellung und deren Verwendung. Weiterhin betrifft die vorliegende Erfindung eine die erfindungsgemäße Zusammensetzung enthaltende kaffeehaltige Instant-Getränkemischung.

Der Begriff der Instantprodukte ist eine Bezeichnung für meist pulverförmige, in Wasser lösliche bzw. dispergierbare Produkte überwiegend auf dem Gebiet der Nahrungs- und Heilmittel, wie Kaffee-, Tee-, Kakao-, Milchprodukte etc. Die Herstellung von Instantprodukten erfolgt im allgemeinen durch Extraktion der Nahrungs- und Heilmittel bzw. deren Inhaltsstoffe, gefolgt von einer anschließenden Trocknung, insbesondere Gefrier- oder Sprühtrocknung. Für weitergehende Einzelheiten kann verwiesen werden auf Römpp Lexikon Chemie, Band 3, 10, Auflage, Georg Thieme Verlag, Stuttgart/New York, 1997, Seite 1936, Stichwort: "Instant-Produkte", sowie die dort referierte Literatur.

Auf diese Weise wird auch Instantkaffee, synonym auch als Löskaffee bezeichnet, hergestellt. Diesbezüglich kann auch auf Römpp Lexikon Chemie, Band 3, Georg Thieme Verlag, Stuttgart/New York 1997, Seiten 2042 bis 2044, Stichwort: "Kaffee", sowie die dort referierte Literatur verwiesen werden, Kaffeehaltige Getränke mit Milchschaum haben weite Verbreitung gefunden. Besonderer Beliebtheit erfreut sich dabei der sogenannte Cappuccino. Hierbei handelt es sich um ein italienisches Kaffeegetränk, das aus gebrühtem Espresso, gegebenenfalls heißer Milch sowie heißem Milchschaum besteht, Der Cappuccino soll auf dem österreichischen Kapuziner basieren, einem normalen Kaffee, der mit Schlagsahne vermischt ist. Der Name des Getränks leitet sich von den Kapuzinern ab: Die Farbe der Kutte, die diese Mönche tragen, entspricht dem idealen Braunton eines Cappuccino, weshalb in Österreich diese Kaffeevariante "Kapuziner" genannt wird, wohingegen im Italienischen daraus "Cappuccino" wurde.

Daher hat es nicht an Versuchen gefehlt, die Herstellung bzw. Aufbereitung von Cappuccino auch als Instant-Getränk zugänglich zu machen. Instant-Kaffeemischungen zur Herstellung von Instant-Cappuccino sind auf dem Markt in großer Zahl erhältlich: Diese Zusammensetzungen enthalten im allgemeinen eine schaumbildende Kaffeeweißer- bzw. Creamer-Komponente, welche bei Aufbereitung mit heißem Wasser den gewünschten Milchschaum liefert, sowie eine Instant-Kaffeekomponente neben gegebenenfalls noch weiteren Inhaltsstoffen. Derartige Instant-Cappuccinozubereitungen sind beispielsweise in der DE 695 32 041 T2 und der DE 698 10 600 T2 beschrieben,

Weiterhin betrifft die DE 196 23 296 A1 ein lösliches Kaffeegetränkepulver, welches bei Zugabe von Wasser ein Kaffeegetränk mit einer geschäumten Oberfläche bildet. Das Kaffeegetränkepulver wird aus einem gashaltigen löslichen Kaffeeweißer-Pulver und einem löslichen Kaffeepulver mit einer verzögerten Wasserlöslichkeit hergestellt.

Nachteilig bei den handelsüblichen und aus dem Stand der Technik bekannten Instant-Cappuccinozusammensetzungen ist die Tatsache, daß bei Aufbereitung der Instant-Cappuccinomischungen mit Wasser der Instant-Kaffee und die schaumbildende Kaffeeweißerkomponente sich in gleicher Weise lösen, so daß die optische Erscheinung des an sich weißen Milchschaums durch dunkle Flecken des gelösten Instant-Kaffees bis hin zu einer insgesamt bräunlichen Schaumbildung beeinträchtigt wird. Mit anderen Worten führen die herkömmlichen Instant-Cappuccinozusammensetzungen - im Unterschied zu einem frisch zubereiteten Cappuccino- zu keinem makellos weißen Milchschaum, sondern lassen einen meist durchgehend braun gefärbten, unansehnlichen Milchschaum entstehen, was den ästhetischen Eindruck eines Cappuccinogetränks nicht unerheblich beeinträchtigt.

Die Aufgabe der vorliegenden Erfindung besteht somit darin, eine Instant-Getränkezusammensetzung bereitzustellen, welche sich zur Aufbereitung eines kaffeehaltigen Instant-Heißgetränks, vorzugsweise in der Art eines Cappuccino-Getränks eignet und dabei die zuvor geschilderten Nachteile des Standes der Technik zumindest im wesentlichen vermeidet oder aber wenigstens verringert bzw. abschwächt.

Die Anmelderin hat überraschenderweise gefunden, daß sich das zuvor geschilderte Problem dadurch lösen läßt, daß in einer Zusammensetzung zur Aufbereitung des kaffeehaltigen Instant-Heißgetränks, vorzugsweise in der Art eines Cappuccino-Getränks, mit Instant-Kaffee enthaltender Komponente einerseits und schaumbildenden Kaffeeweißer (Creamer) enthaltender Kaffeeweißerkomponente andererseits die beiden Komponenten (d. h. Kaffeekomponente einerseits und die Kaffeeweißerkomponente andererseits) mit unterschiedlichen, zeitversetzten Löslichkeiten (Wasserlöslichkeiten) ausgestattet sind bzw. die beiden vorgenannten Komponenten bei Aufbereitung mit Wasser zeitversetzt löslich ausgebildet sind.

Zur Lösung des zuvor geschilderten Problems schlägt die vorliegende Erfindung somit eine Zusammensetzung (d. h. Instant-Zusammensetzung) nach Anspruch 1 vor; weitere vorteilhafte Ausgestaltungen sind Gegenstand der diesbezüglichen abhängigen Ansprüche.

Weiterer Gegenstand der vorliegenden Erfindung ist eine kaffeehaltige Instant-Getränkemischung gemäß Anspruch 13.

Wiederum weiterer Gegenstand der vorliegenden Erfindung ist die erfindungsgemäße Verwendung der Zusammensetzung nach der vorliegenden Erfindung, wie sie in Anspruch 14 definiert ist; weitere, vorteilhafte Ausgestaltungen sind Gegenstand des diesbezüglichen abhängigen Verwendungsanspruchs.

Schließlich ist ein wiederum weiterer Gegenstand der vorliegenden Erfindung ein Verfahren zur Herstellung der erfindungsgemäßen Zusammensetzung nach Anspruch 15; weitere, vorteilhafte Ausgestaltungen sind Gegenstand der diesbezüglichen abhängigen Verfahrensansprüche.

Es versteht sich von selbst, daß besondere Ausgestaltungen und Ausführungsformen, welche nur im Zusammenhang mit einem Erfindungsaspekt beschrieben sind, auch in bezug auf die anderen Erfindungsaspekte entsprechend gelten, ohne daß dies ausdrücklich beschrieben ist.

Gegenstand der vorliegenden Erfindung ist somit - gemäß einem ersten Aspekt der vorliegenden Erfindung - eine Zusammensetzung, welche sich insbesondere zur Aufbereitung eines kaffeehaltigen Instant-Heißgetränks, vorzugsweise in der Art eines Cappuccino-Getränks, eignet, wobei die Zusammensetzung eine Trockenmischung umfaßt, wobei die Trockenmischung
(A) mindestens eine vorzugsweise teilchenförmig ausgebildete Kaffeekomponente, welche Instant-Kaffee enthält, und
(B) mindestens eine vorzugsweise teilchenftörmig ausgebildete Kaffeeweißerkomponente (synonym auch als "Milchschaumkomponente" bezeichnet), welche einen unter Aufbereitung mit vorzugsweise heißern Wasser schaumbildenden Kaffeeweißer (= Creamer) enthält, umfaßt,
   wobei die Kaffeckomponente (A) einerseits und die Kaffeeweißerkomponente (B) andererseits mit unterschiedlichen, insbesondere zeitversetzten Wasserlöslichkeiten ausgestattet sind, wobei die Kaffeekomponente (A) mit einer geringeren Wasserlöslichkeit als die Kaffeeweißerkomponente (B) ausgestattet ist, und wobei die Kaffeekomponente (A) verdichtet vorliegt, wobei das Verhältnis von der Schüttdichte der Kaffeekomponente (A) zu der Schüttdichte der Kaffeeweißerkomponente (B) mindestens 1,5 beträgt.

Auf diese Weise wird erfindungsgemäß realisiert, daß sich bei Aufbereitung der erfindungsgemäßen Zusammensetzung mit vorzugsweise heißem Wasser die Kaffeeweißerkomponente unter Ausbildung eines weißen Milchschaums löst, die Kaffeekomponente dagegen noch nicht bzw. zeitverzögert hierzu, da diese mit einer geringeren Wasserlöslichkeit ausgestattet ist, so daß der Milchschaum des Cappuccinogetränks weiß bleibt. Im allgemeinen setzt sich die verspätet bzw, retardiert und/oder weniger lösliche Kaffeekomponente zunächst auf dem Boden der Tasse ab und wird durch Aufrühren in der Flüssigkeit dann verteilt und gelöst. Auf diese Weise verbindet sich die gelöste Kaffeekomponente nicht mit dem Milchschaum, welcher somit weiß bleibt.

Das erfindungsgemäße Konzept wird dadurch realisiert, daß die Kaffeekomponente (A) verdichtet, vorzugsweise druckverdichtet, kompaktiert, verpreßt, brikettiert oder dergleichen, vorliegt. Erfindungsgemäß beträgt das Verhältnis von der Schüttdichte der Kaffeekomponente (A) zu der Schüttdichte der Kaffeeweißerkomponente (B) mindestens 1,5, insbesondere mindestens 1,75, vorzugsweise 2, besonders bevorzugt mindestens 2,25, ganz besonders bevorzugt mindestens 2,5.

Im allgemeinen weist die Kaffeekomponente (A) eine Schüttdichte von 400 bis 1.000 g/l, insbesondere 500 bis 900 g/l, vorzugsweise 600 bis 800 g/l, auf. Die Kaffeeweißerkomponente (B) weist dagegen im allgemeinen eine Schüttdichte von 50 bis 400 g/l, insbesondere 75 bis 350 g/l, vorzugsweise 100 bis 300 g/l, auf.

Kumulativ zu der vorgenannten Maßnahme, daß die Kaffeekomponente (A) verdichtet wird, kann die zeitversetzte Löslichkeit der Kaffeekomponente (A) einerseits und der Kaffeeweißerkomponente (B) andererseits - gemäß einer Variante der vorliegenden Erfindung - auch dadurch erreicht werden, daß die Kaffeekomponente (A), insbesondere deren Teilchen, zusätzlich mit einer die Wasserlöslichkeit herabsetzenden Beschichtung überzogen ist. Auf diese Weise kann die Kaffeekomponente (A) mit einer weiter retardierten Wasserlöslichkeit im Vergleich zu der Kaffeeweißerkomponente (B) ausgerüstet werden. Dabei kann die Menge an der die Wasserlöslichkeit herabsetzenden Beschichtung in weiten Bereichen variieren: Im allgemeinen ist die die Wasserlöslichkeit herabsetzende Beschichtung in Mengen von 0,01 bis 20 Gew.-%, insbesondere 0,1 bis 10 Gew.-%, vorzugsweise 1 bis 8 Gew.-%, besonders bevorzugt 2 bis 5 Gew.-%, bezogen auf die Kaffeekomponente (A) bzw. deren Teilchen aufgebracht. Bei der die Wasserlöslichkeit herabsetzenden Beschichtung handelt es sich insbesondere um mindestens eine lebensnnittelkompatible, insbesondere verzehrbare Substanz; im allgemeinen ist die die Wasserlöslichkeit herabsetzende Beschichtung aus Kohlehydraten, vorzugsweise Polysacchariden und deren Derivaten, ausgewählt. In besonders bevorzugter Weise ist die die Wasserlöslichkeit herabsetzende Beschichtung bzw. Beschichtungssubstanz aus der Gruppe von Hydrokolloiden, besonders bevorzugt Gummi arabikum, Xanthan, Pektinen, Guargummi, Guarkernmehl, Stärkemehlen, Cellulosen und Cellulosederivaten, Agar, Gelatine, Caseinaten, Carrageen und Alginaten sowie deren Mischungen, ausgewählt.

Erfindungsgemäß besonders gute Ergebnisse werden erhalten, wenn beide Maßnahmen (d. h. Verdichten einerseits und Beschichten andererseits) kumulativ realisiert werden.

Wenn das Konzept der Verdichtung und Beschichtung der Kaffeekomponente (A) kumulativ realisiert wird, wird im allgemeinen erfindungsgemäß derart vorgegangen, daß die Instant-Kaffee enthaltende Komponente (A) zunächst in der zuvor beschriebenen Weise verdichtet und die verdichteten Produkte nachfolgend mit der die Löslichkeit herabsetzenden Beschichtung versehen werden. Grundsätzlich ist aber auch eine umgekehrte Reihenfolge möglich, wenn auch die erstgenannte Reihenfolge erfindungsgemäß bevorzugt ist. Wie zuvor beschrieben, ist es gleichermaßen möglich, nur die Verdichtung vorzunehmen.

Wie zuvor beschrieben, ist die Kaffeekomponente (A) im allgemeinen teilchenförmig, insbesondere kornförmig, ausgebildet, d. h. die Kaffeekomponente (A) besteht im allgemeinen aus einzelnen Partikeln. Vorteilhafterweise liegt die Kaffeekomponente (A) in Form eines Pulvers, Granulats oder dergleichen vor. Die betreffende Teilchengröße der Partikel der Kaffeekomponente (A) kann dabei in weiten Bereichen variieren: Im allgemeinen liegt die Teilchengröße der Partikel der Kaffeekomponente (A) im Bereich von 0,1 bis 10 mm, insbesondere 4 bis 5 mm, vorzugsweise 2 bis 3 mm, wobei vorteilhafterweise mindestens 50 %, insbesondere mindestens 75 %, vorzugsweise mindestens 90 % und ganz besonders bevorzugt 100 % der Partikel der Kaffeekomponente (A) Teilchengrößen im vorgenannten Größenbereich aufweisen.

Was die Kaffeekomponente (A) anbelangt, so ist diese im allgemeinen erhältlich durch an sich bekannte Herstellung von Instant-Kaffee, insbesondere mittels Sprühtrocknung, Gefriertrocknung, Agglomeration oder dergleichen, gefolgt von einem Verdichten, vorzugsweise Druckverdichten, Kompaktieren, Verpressen, Brikettieren oder dergleichen, gegebenenfalls mit sich anschließender Zerkleinerung. Dies wird nachfolgend im Rahmen des Herstellungsverfahrens noch im Detail beschrieben werden.

Wie zuvor beschrieben, ist im allgemeinen auch die Kaffeeweißerkomponente (B) teilchenförmig, insbesondere kornförmig, ausgebildet und besteht aus einzelnen Partikeln, insbesondere in Form eines Pulvers, Granulats oder dergleichen. Die Teilchengröße der Partikel der Kaffeeweißerkomponente (B) kann gleichermaßen in weiteren Bereichen variieren: Im allgemeinen beträgt die Teilchengröße der Partikel der Kaffeeweißerkomponente (B) 0,001 bis 5 mm, insbesondere 0,005 bis 2 mm, vorzugsweise 0,01 bis 2 mm, besonders bevorzugt 0,01 bis 1 mm, wobei vorteilhafterweise mindestens 50 %, insbesondere mindestens 75 %, vorzugsweise mindestens 95 % und ganz besonders bevorzugt 100 % der Partikel der Kaffeeweißerkomponente (B) die vorgenannten Teilchengrößen aufweisen.

Was die Kaffeeweißerkomponente (B) anbelangt, so ist diese im allgemeinen durch an sich bekannte Verfahren des Stand der Technik erhältlich. In diesem Zusammenhang kann - in nichtbeschränkender Weise - beispielhaft auf die DE 600 20 291 T2, die DE 600 22 583 T2, die DE 698 10 600 T2 und die DE 695 32 041 T2 verwiesen werden.

In erfindungsgemäß bevorzugter Weise ist die Kaffeeweißerkomponente (B) in an sich bekannter Weise durch Sprühtrocknung, insbesondere in Gegenwart von Stickstoff und/oder Kohlendioxid, erhältlich.

Üblicherweise ist die Kaffeeweißerkomponente (B) auf Basis von mindestens einem Protein, vorzugsweise Molkenprotein, mindestens einem Lipid und mindestens einem Träger, vorzugsweise einem Kohlenhydrat, ausgebildet. Insbesondere ist die Kaffeeweißerkomponente (B) im Rahmen der erfindungsgemäßen Zusammensetzung auf Basis von Molkepulver, insbesondere Süßmolkenpulver, gegebenenfalls zusammen mit Milchpulver, insbesondere Magermilchpulver, und/oder gegebenenfalls zusammen mit mindestens einem Stabilisator, insbesondere einem Phosphat, ausgebildet.

Zu Zwecken der Schaumbildung unter Aufbereitung mit vorzugsweise heißem Wasser enthält die Kaffeeweißerkomponente (B) außerdem mindestens ein Gas und/oder einen gasfreisetzenden Bestandteil. In einer erfindungsgemäß bevorzugten Ansführungsform kann die Kaffeeweißerkomponente (B) mindestens ein Gas, insbesondere Stickstoff und/oder Kohlendioxid, in eingeschlossener und/oder verkapselter Form enthalten; dies läßt sich durch Sprühtrocknung in der zuvor geschilderten Weise in Gegenwart von Stickstoff und/oder Kohlendioxid realisieren. Alternativ hierzu kann gemäß einer erfindungsgemäß weniger bevorzugten Ausführungsform der Kaffeeweißerkomponente (B) ein vorzugsweise anorganisches Carbonat oder Hydrogencarbonat (z. B. ein Alkali- oder Erdalkalicarbonat oder -hydrogencarbonat) zusammen mit einem lebensmittelkompatiblen, insbesondere verzehrbaren Säuerungsmittel zugesetzt sein, so daß bei Aufbereitung mit Wasser auf diese Weise eine Schaumbildung realisiert wird.

Die Mengen an Kaffeekomponente (A) einerseits und Kaffeeweißerkomponente (B) andererseits in der erfindungsgemäßen Zusammensetzung können in weiteren Bereichen variieren: Üblicherweise enthält die Zusammensetzung nach der vorliegenden Erfindung, jeweils bezogen auf die erfindungsgemäße Zusammensetzung, die Kaffeekomponente (A) in Mengen von 0,1 bis 30 Gew.-%, insbesondere 1 bis 20 Gew.-%, vorzugsweise 5 bis 15 Gew,-%, besonders bevorzugt 10 bis 20 Gew.-%, und/oder die Kaffeeweißerkomponente (B) in Mengen von 10 bis 85 Gew.-%, insbesondere 25 bis 75 Gew.-%, vorzugsweise 35 bis 70 Gew.-%, besonders bevorzugt 50 bis 60 Gew.-%. Dennoch ist es nicht ausgeschlossen, anwendungsbezogen oder einzelfallbedingt von den vorgenannten Mengenbereichen abzuweichen, ohne daß der Rahmen der vorliegenden Erfindung verlassen ist.

Weiterhin kann die erfindungsgemäße Zusammensetzung außerdem mindestens eine vorzugsweise teilchenförmig ausgebildete Träger- und/oder Süßungskomponente (C) umfassen, wobei die Träger- und/oder Süßungskomponente (C) im allgemeinen mindestens einen Träger- und/oder Süßungsstoff enthält. Letzterer kann insbesondere ausgewählt sein aus der Gruppe von (i) Zuckern (z. B. Saccharose, Mannose, Maltose, Dextrose, Lactose und Glucose); (ii) Zuckeralkoholen (z. B. Mannit, Xylit, Sorbit (D-Glucit), Isomaltit (Isomalt), Maltit, Lactit und Galactit); (iii) Zuckerersatzstoffen (z. B. Zuckeraustauschstoffen, Süßstoffen und Süßungsmitteln); (iv) Stärkederivaten (z. B. Stärkeabbauprodukten, Dextrinen und Maltodextrinen); sowie deren Mischungen. In erfindungsgemäß besonders bevorzugter Weise enthält die Träger- und/oder Süßungskomponente (C) Saccharose und gegebenenfalls Süßstoffe.

Unter dem zuvor verwendeten Begriff der Zuckeraustauschstoffe, wie er erfindungsgemäß verwendet wird, versteht man eine Sammelbezeichnung für Stoffe, welche anstelle von Saccharose zur Süßung von Lebensmitteln verwendet werden. Im Gegensatz zu den intensiv schmeckenden Süßstoffen, von denen der Begriff der Zuckeraustauschstoffe abgegrenzt werden muß, werden Zuckeraustauschstoffe technologisch wie Saccharose eingesetzt, d. h. sie besitzen einen "körper" und einen physiologischen Brennwert (nutritive Zukkeraustauschstoffe). Die Süßkraft entspricht in weiten Grenzen etwa der von Saccharose. Der physiologische Vorteil der Zuckeraustauschstoffe im Vergleich zur Saccharose liegt in der insulinunabhängigen Metabolisierung (Diabetiker) und in der zum Teil verminderten kariogenen Wirkung. Für einige Zuckeraustauschstoffe, wie z. B. Xylit, ist sogar eine antikariogene Wirkung beschrieben. Die Zuckeraustauschstoffe und die hiervon abzugrenzenden Süßstoffe werden gemeinsam als Süßungsmittel bezeichnet. Für weitergehende Einzelheiten zu dem Begriff der Zuckeraustauschstoffe kann beispielsweise verwiesen werden auf Römpp Lexikon Chemie, Band 6, 10. Auflage, Georg Thieme Verlag, Stuttgart/New York, 1999, Seite 5098 bis 5100, Stichwort: "Zuckeraustauschstoffe", und auf Römpp Lexikon Lebensmittelchemie, 9. Auflage, Georg Thieme Verlag, Stuttgart/New York, Seite 955, Stichwort: "Zuckeraustauschstoffe", sowie die dort jeweils referierte Literatur.

Bevorzugt eingesetzte Zuckeraustauschstoffe sind insbesondere ausgewählt aus der Gruppe von Zuckeralkoholen und Fructose. Der Begriff der Zuckeralkohole (Polyole), wie er erfindungsgemäße verwendet wird, ist eine Gruppenbezeichnung für im allgemeinen kristalline, gut wasserlösliche Polyhydroxyverbindungen, die durch Reduktion der Carbonylfunktion aus Zuckern entstehen. Hierbei werden insbesondere Monosaccharid-Zuckeralkohole und Disaccharid-Zuckeralkohole unterschieden. Die erfindungsgemäß bevorzugten Zuckeralkohole sind insbesondere ausgewählt aus der Gruppe von Mannit, Xylit, Sorbit (D-Glucit), Isomaltit (Isomalt), Maltit und Lactit. Für weitergehende Einzelheiten zu dem Begriff der Zuckeralkohole kann insbesondere verwiesen werden auf Römpp Lexikon Chemie, 10. Auflage, Georg Thieme Verlag, Stuttgart/New York, Band 6, 1999, Seite 5097, Stichwort: "Zuckeralkohole", und auf Römpp Lexikon Lebensmittelchemie, 9. Auflage, Georg Thieme Verlag, Stuttgart/New York, 1995, Seiten 953/954, Stichwort: "Zukkeralkohole", sowie die dort jeweils referierte Literatur.

Was den zuvor benannten Begriff der Stärkederivate anbelangt, so sind diese vorzugsweise ausgewählt aus Stärkeabbauprodukten, insbesondere Dextrinen und Maltodextrinen, vorzugsweise Maltodextrinen. Für weitergehende Einzelheiten zu Dextrinen und Maltodextrinen kann insbesondere verwiesen werden auf Römpp Lexikon Chemie, 10. Auflage, Georg Thieme Verlag, Stuttgart/New York, Band. 2, 1997, Seite 928, Stichwort: "Dextrine", und Band 4, 1998, Seite 2513, Stichwort: "Maltodextrine", und auf Römpp Lexikon Lebensmittelchemie, Georg Thieme Verlag, Stuttgart/New York, 9. Auflage, 1995, Seite 213, Stichwort: "Dextrin", und Seite 518, Stichwort: "Maltodextrine", sowie die dort jeweils referierte Literatur.

Wie zuvor beschrieben, ist auch die Träger- und/oder Süßungskomponente (C) im allgemeinen teilchenförmig, insbesondere komförmig, ausgebildet und besteht aus einzelnen Partikeln, wobei die Form eines Pulvers, Granulats oder dergleichen bevorzugt ist. Die Teilchengröße der Partikel der Träger-und/oder Süßungskomponente (C) variiert im allgemeinen im Bereich von 0,0001 bis 5 mm, insbesondere 0,001 bis 4 mm, vorzugsweise 0,01 bis 3 mm, besonders bevorzugt 0,1 bis 2 mm, wobei vorteilhafterweise mindestens 50 %, insbesondere mindestens 75 %, vorzugsweise mindestens 95 % und ganz besonders bevorzugt 100 % der Teilchen der Träger- und/oder Süßungskomponente (C) Teilchengrößen im vorgenannten Bereich aufweisen. Üblicherweise enthält die erfindungsgemäße Zusammensetzung die Träger-und/oder Süßungskomponente (C), bezogen auf die erfindungsgemäße Zusammensetzung, in Mengen von 0,001 bis 60 Gew.-%, insbesondere 0,1 bis 50 Gew.-%, vorzugsweise 5 bis 40 Gew.-%, besonders bevorzugt 20 bis 30 Gew.-%.

Weiterhin kann die Zusammensetzung nach der vorliegenden Erfindung außerdem mindestens einen weiteren Inhaltsstoff (D), vorzugsweise gleichermaßen in Teilchenform, enthalten. Der mindestens eine weitere Inhaltsstoff (D) kann insbesondere ausgewählt sein aus der Gruppe von Kakao, Aromen und Aromastoffen, Salz (insbesondere Kochsalz), Pflanzenextrakten, Tee-Extrakten, Säuerungsmitteln, Vitaminen und Mineralien, Lecithinen, Verarbeitungshilfsmitteln oder dergleichen sowie deren Mischungen. Die Menge an dem oder den weiteren Inhaltsstoffen (D) in der erfindungsgemäßen Zusammensetzung kann in weiten Bereichen variieren: Im allgemeinen enthält die erfindungsgemäße Zusammensetzung, bezogen auf die Zusammensetzung, den oder die weiteren Inhaltsstoffe (D) in Mengen von 0,0001 bis 5 Gew.-%, insbesondere 0,001 bis 4 Gew.-%, vorzugsweise 0,01 bis 3 Gew.-%, besonders bevorzugt 0,05 bis 2 Gew,-%.

In erfindungsgemäß besonders vorteilhafter Weise liegt die Zusammensetzung dosierfertig in vorzugsweise gas- bzw. luftdichten und/oder aromabewahrenden Portionsbeuteln, insbesondere für eine tassenweise Dosierung, verpackt vor.

Weiterer Gegenstand der vorliegenden Erfindung - gemäß einem zweiten Aspekt der vorliegenden Erfindung - ist eine kaffeehaltige Instant-Getränkemischung, insbesondere für ein Cappuccino-Getränk, welche die zuvor beschriebene Zusammensetzung nach der vorliegenden Erfindung enthält.

Wiederum ein weiterer Gegenstand der vorliegenden Erfindung - gemäß einem dritten Aspekt der Erfindung - ist die Verwendung der Zusammensetzung nach der vorliegenden Erfindung zur Herstellung eines kaffeehaltigen Instant-Getränkes, insbesondere Instant-Cappuccinogetränkes. Im allgemeinen erfolgt die Herstellung des trinkfertigen Instant-Getränkes durch Aufbereiten mit einer trinkbaren Flüssigkeit, insbesondere vorzugsweise heißem Wasser; dabei können 5 bis 50 g der erfindungsgemäßen Zusammensetzung mit 100 bis 300 ml Flüssigkeit aufbereitet werden.

Schließlich ist ein wiederum weiterer Gegenstand der vorliegenden Erfindung - gemäß einem vierten und letzten Aspekt der vorliegenden Erfindung - ein Verfahren zur Herstellung der erfindungsgemäßen Zusammensetzung, wie sie zuvor beschrieben worden ist, wobei das erfindungsgemäße Verfahren die folgenden Verfahrensschritte umfaßt:
(a) Bereitstellung mindestens einer vorzugsweise teilchenförmig ausgebildeten, Instant-Kaffee enthaltenden Kaffeekomponente (A) durch Herstellung einer Instantkaffee-Trockenzusammensetzung, insbesondere in Form eines Instant-Kaffeepulvers oder -granulats, mit an sich bekannten Methoden, gefolgt von einem Verfahrensschritt des Verdichtens der Instantkaffee-Trockenzusammensetzung, gegebenenfalls gefolgt von einem Verfahrensschritt der Zerkleinerung;
(b) Bereitstellung mindestens einer vorzugsweise teilchenförmig ausgebildeten, einen unter Aufbereitung mit vorzugsweise heißem Wasser schaumbildenden Kaffeeweißer (Creamer) enthaltenden Kaffeeweißerkomponente ("Milchschaumkomponente") (B) mit an sich bekannten Methoden;
(c) Mischen der in Schritt (a) erhaltenen Kaffeekomponente (A) mit der in Schritt (b) erhaltenen Kaffeeweißerkomponente ("Milchschaumkomponente") (B),
   wobei in Verfahrensschritt (a) die Verdichtung derart durchgeführt wird, daß das Verhältnis von der Schüttdichte der Kaffeekomponente (A) zu der Schüttdichte der Kaffeeweißerkomponente (B) mindestens 1,5 beträgt.

Dabei kann es zusätzlich vorgesehen sein, die verdichtete Komponente (A) mit einer die Wasserlöslichkeit herabsetzenden Beschichtung zu versehen, wie zuvor beschrieben.

Die Herstellung der Instant-Trockenzusammensetzung in Verfahrensschritt (a) erfolgt üblicherweise mittels Sprühtrocknung, Gefriertrocknung, Agglomerationsverfahren oder dergleichen. Der fakultative abschließende Schritt des Zerkleinerns der verdichteten Instantkaffee-Trockenzusammensetzung erfolgt gleichermaßen mittels an sich bekannter Methoden, beispielsweise durch Brechen, Sieben, Vermahlen oder dergleichen.

Das Verdichten der Instant-Kaffee-Trockenzusammensetzung im Verfahrensschritt (a) kann durch Druckverdichten, Kompaktieren, Verpressen, Brikettieren oder dergleichen erfolgen. Erfindungsgemäß erfolgt die Verdichtung derart, insbesondere für eine solche Zeitdauer und/oder unter einem solchen Druck, daß die Schüttdichte der ursprünglichen Instantkaffee-Trockenzusammensetzung um mindestens das 1,5 fache, vorzugsweise um mindestens das 1,75 fache, besonders bevorzugt um mindestens das 2fache, erhöht wird.

Beispielsweise liefern übliche Herstellungsverfahren für Instant-Kaffee Schüttdichten von 200 bis 400 g/l, insbesondere 200 bis 250 g/l, wobei nachfolgend eine Verdichtung auf die vorstehend genannten Werte erfolgt (d. h. 400 bis 1.000 g/l, insbesondere 500 bis 900 g/l, vorzugsweise 600 bis 800 g/l).

Was die Herstellung der Kaffeeweißerkomponente (B) in Verfahrensschritt (b) anbelangt, so kann diese beispielsweise mittels Sprühtrocknung, vorzugsweise in Gegenwart von Stickstoff und/oder Kohlendioxid, erfolgen, wobei - wie zuvor beschrieben - üblicherweise von einer molkenhaltigen, insbesondere süßmolkenhaltigen, Ausgangslösung oder -dispersion ausgegangen werden kann. Vorteilhafterweise wird im Rahmen der Erfindung dabei derart vorgegangen, daß bei der Herstellung der Kaffeeweißerkomponente (B) in Verfahrensschritt (b) mittels Sprühtrocknung mindestens ein Gas, insbesondere Stickstoff und/oder Kohlendioxid, in die Kaffeeweißerkomponente (B) eingeschlossen und/oder verkapselt wird, wobei das eingeschlossene bzw. verkapselte Gas dann bei der Aufbereitung mit vorzugsweise heißem Wasser wieder freigesetzt wird und den gewünschten Milchschaum generiert.

Abschließend kann, falls gewünscht, die auf diese Weise erhaltene Zusammensetzung in dosierfertige, gas- bzw. luftdichte und/oder aromaschützende Portionsbeutel, insbesondere für eine tassenweise Dosierung, verpackt werden.

Gemäß einer typischen Ausführungsform der vorliegenden Erfindung kann bei der Durchführung des erfindungsgemäßen Verfahrens wie folgt vorgegangen werden: Ausgehend von einem sprühgetrockneten, agglomerierten oder gefriergetrockneten Instant-Kaffee wird dieses Produkt zunächst kompaktiert und können die entstandenen Schülpen über Sieben zu Granulaten gebrochen werden; das Kompaktieren kann beispielsweise über entsprechende Preßwalzen, z. B. verschiedener Hersteller, wie beispielsweise Alexander oder Hosoka Bepex, erfolgen. Durch Einsatz von verschiedenen Pressen, wie z. B. Tablettenpressen, lassen sich ebenfalls Kompaktate herstellen. Die Kompaktate können durch entsprechende Siebe gebrochen werden, so daß vorteilhafterweise Granulate von 0,1 bis 10 mm, vorzugsweise 4 bis 5 mm, insbesondere 2 bis 3 mm, entstehen. Diese Granulate können dann in einer Wirbelschicht oder anderen entsprechenden Coatern beispielsweise mit einer Lösung von Gummi arabicum beschichtet bzw. gecoatet werden. Es können beispielsweise auch andere Hydrokolloide, wie z. B. Xanthan, Guarkernmehl, Pektine etc., eingesetzt werden. Der Überzug des kompaktierten Granulates kann dabei mit 0,01 bis 20 Gew.-% Hydrokolloid realisiert werden. Durch die entsprechende Kompaktierung bzw. Granulierung und durch den anschließenden Überzug mit einem Hydrokolloid lösen sich die Instant-Kaffeepartikel in heißem Wasser zeitverzögert zu der Kaffeeweißerkomponente. Letztere kann nach dem Stand der Technik mit Hilfe eines Sprühturms hergestellt werden, in dem während der Sprühtrocknung Stickstoff und/oder Kohlendioxid von dem Sprühmedium verkapselt wird bzw. werden, so daß das getrocknete Kaffeeweißerpulver (Creamer-Pulver) die verkapselten Gase enthält und beim Aufgießen mit vorzugsweise heißem Wasser der typische Cappuccino-Milchschaum entsteht.

Für weitergehende Einzelheiten zu der erfindungsgemäßen kaffeehaltigen Instant-Getränkemischung, zu der erfindungsgemäßen Verwendung sowie zu dem erfindungsgemäßen Verfahren kann auf die vorstehenden Ausführungen zu der erfindungsgemäßen Zusammensetzung verwiesen werden, welche in bezug auf die übrigen Aspekte der vorliegenden Erfindung entsprechend gelten.

Weitere Ausgestaltungen, Abwandlungen und Variationen sowie Vorteile der vorliegenden Erfindung sind für den Fachmann beim Lesen der Beschreibung ohne weiteres erkennbar und realisierbar, ohne daß er dabei den Rahmen der vorliegenden Erfindung verläßt. Die vorliegende Erfindung wird anhand des folgenden Ausführungsbeispiels veranschaulicht, welches die vorliegende Erfindung jedoch nicht beschränkt.

### Ausführungsbeispiele:

### Herstellung der Kaffeeweißerkomponente:

Eine teilchenförmig ausgebildete, einen unter Aufbereitung mit vorzugsweise heißem Wasser schaumbildenden Kaffeeweißer (Creamer) enthaltende Kaffeeweißerkomponente ("Milchschaumkomponente") wird in an sich bekannter Weise mit Hilfe eines Sprühturms hergestellt, wobei während der Sprühtrocknung Stickstoff und/oder Kohlendioxid eingesetzt wird und von dem Sprühmedium verkapselt wird bzw, werden. Das resultierende, sprühgetrocknete Kaffeeweißerpulver enthält die verkapselten Gase, so daß beim Aufgießen mit Wasser der typische Cappuccino-Milchschaum entstehen kann. Die Schüttdichte beträgt ca. 200 g/l, und die Teilchengröße liegt im Bereich von 0,01 bis 1 mm.

### Herstellung der Kaffeekomponente:

Eine teilchenförmig ausgebildete, Instant-Kaffee enthaltende Komponente wird in an sich bekannter Weise mittels Sprühtrocknung hergestellt. Es resultieren Instant-Kaffeegranulate mit einer Schüttdichte von 200 bis 250 g/l.
Ansatz 1 (nichterfindungsgemäß): Die resultierende Kaffeekomponente wird als solche in einer Instant-Cappuccinomischung eingesetzt.
Ansatz 2 (erfindungsgemäß): Das resultierende Instant-Kaffeegranulat wird mittels Preßwalzen (Hosoka Bepex) auf eine Schüttdichte von 650 bis 750 g/l verdichtet, und die resultierenden, verdichteten, bzw. kompaktierten Instant-Kaffeegranulate werden nachfolgend durch entsprechende Siebe gebrochen, so daß kompaktierte bzw. verdichtete Instant-Kaffeegranulate von 4 bis 5 mm Teilchengröße resultieren. Diese werden dann teils in der Instant-Cappuccinomischung eingesetzt, teils in Ansatz 3 weiterverarbeitet.
Ansatz 3 (erfindungsgemäß): Die aus Ansatz 2 hervorgehenden kompaktierten Instant-Kaffeegranulate werden nachfolgend in einer Wirbelschicht mit 5 Gew.-% Gummi arabicum beschichtet.
Ansatz 4 (nichterfindungsgemäß): Die erhaltenen, aber nichtverdichteten Instant-Kaffeegranulate werden wie in Ansatz 3, jedoch ohne nachfolgende Verdichtung bzw. Kompaktierung, mit einer Lösung von Gummi arabicum (4 Gew.-% Gummi arabicum, bezogen auf Granulat) beschichtet.

### Herstellung der Instant-Cappuccinomischungen:

55 Gewichtsteile der zuvor hergestellten Kaffeeweißerkomponente werden mit 20 Gewichtsteilen Instant-Kaffeegranulat (d. h. Kaffeekomponente) und 25 Gewichtsteilen eines Trägerstoffes (hier: Saccharose) homogen gemischt, so daß eine homogene Instant-Cappuccinomischung resultiert. Gemäß Rezeptur 1 wird zur Herstellung der Instant-Cappuccinomischung das Instant-Kaffeegranulat aus Ansatz 1 (nichterfindungsgemäß) eingesetzt, wohingegen bei den Rezepturen 2 bzw. 3 bzw. 4 das Instant-Kaffeegranulat gemäß Ansatz 2 bzw. 3 bzw. 4 (Ansätze 2 und 3 erfindungsgemäß, Ansatz 4 nichterfindungsgemäß) eingesetzt wird.

Nachfolgend werden die Zusammensetzungen gemäß den vorgenannten Rezepturen 1 bis 4 mit heißem Wasser zu einem Instant-Cappuccinogetränk aufbereitet (jeweils ca. 50 g der Zusammensetzung auf ca. 150 ml Wasser). Bei der nichterfindungsgemäßen Rezeptur 1 resultiert ein Cappuccino-Getränk, dessen Milchschaum durchgehend bräunlich und somit unansehnlich gefärbt ist; dagegen resultieren bei den drei Rezepturen 2 bis 4 Cappuccino-Getränke mit weißem Cappuccino-Milchschaum, wobei im Falle der Rezeptur 3, welche den kompaktierten und beschichteten Instant-Kaffee enthält, der beste optische Eindruck des Cappuccinomilchschaums resultiert.

Bei den Cappuccino-Getränken gemäß den Rezepturen 2 bis 4 setzt sich der enthaltene Kaffee zunächst auf den Boden der Tasse ab und wird durch Rühren in der Flüssigkeit verteilt, so daß der Kaffee sich nicht mehr mit dem Milchschaum verbinden kann, sondern der Schaum weiß ist bzw. bleiben kann.

Die vorstehenden Versuche belegen, daß es erfindungsgemäß in eindrucksvoller Weise gelingt, ein Cappuccino-Heißgetränk ausgehend von einer Instant-Getränkemischung zu erzeugen, dessen Milchschaum so weiß wie ein frisch hergestellter Cappuccino ist.

## Patentansprüche

1. Zusammensetzung, insbesondere zur Aufbereitung eines kaffeehaltigen Instant-Heißgetränks, vorzugsweise in der Art eines Cappuccino-Getränks, wobei die Zusammensetzung eine Trockenmischung umfaßt, wobei die Trockenmischung
(A) mindestens eine vorzugsweise teilchenförmig ausgebildete Kaffeekomponente, enthaltend Instant-Kaffee, und
(B) mindestens eine vorzugsweise teilchenförmig ausgebildete Kaffeeweißerkomponente ("Milchschaumkomponente"), enthaltend einen unter Aufbereitung mit vorzugsweise heißem Wasser schaumbildenden Kaffeeweißer (Creamer),
umfaßt,
wobei die Kaffeekomponente (A) einerseits und die Kaffeeweißerkomponente (B) andererseits mit unterschiedlichen, insbesondere zeitversetzten Wasserlöslichkeiten ausgestattet sind, wobei die Kaffeekomponente (A) mit einer geringeren Wasserlöslichkeit als die Kaffeeweißerkomponente (B) ausgestattet ist, und wobei die Kaffeekomponente (A) verdichtet vorliegt, wobei das Verhältnis von der Schüttdichte der Kaffeekomponente (A) zu der Schüttdichte der Kaffeeweißerkomponente (B) mindestens 1,5 beträgt.

2. Zusammensetzung nach Anspruch 1, **dadurch gekennzeichnet, daß** die Kaffeekomponente (A) druckverdichtet, kompaktiert, verpreßt, brikettiert oder dergleichen vorliegt und daß das Verhältnis von der Schüttdichte der Kaffeekomponente (A) zu der Schüttdichte der Kaffeeweißerkomponente (B) mindestens 1,75, vorzugsweise mindestens 2, besonders bevorzugt mindestens 2,25, ganz besonders bevorzugt mindestens 2,5, beträgt.

3. Zusammensetzung nach Anspruch 1 oder 2, **dadurch gekennzeichnet, daß** die Kaffeekomponente (A) eine Schüttdichte von 400 bis 1.000 g/l, insbesondere 500 bis 900 g/l, vorzugsweise 600 bis 800 g/l, aufweist und/oder daß die Kaffeeweißerkomponente (B) eine Schüttdichte von 50 bis 400 g/!, insbesondere 75 bis 350 g/l, vorzugsweise 100 bis 300 g/l, aufweist.

4. Zusammensetzung nach einem der vorangehenden Ansprüche, **dadurch gekennzeichnet, daß** die Kaffeekomponente (A) teilchenförmig, insbesondere komförmig, vorliegt und/oder aus einzelnen Partikeln besteht, insbesondere in Form eines Pulvers, Granulats oder dergleichen, insbesondere wobei die Teilchengröße der Partikel der Kaffeekomponente (A) 0,1 bis 10 mm, insbesondere 4 bis 5 mm, vorzugsweise 2 bis 3 mm, beträgt.

5. Zusammensetzung nach einem der vorangehenden Ansprüche, **dadurch gekennzeichnet, daß** die Kaffeekomponente (A) erhältlich ist durch an sich bekannte Herstellung von Instant-Kaffee, insbesondere mittels Sprühtrocknung, Gefriertrocknung, Agglomeration oder dergleichen, gefolgt von einem Verdichten, vorzugsweise Druckverdichten, Kompaktieren, Verpressen, Brikettieren oder dergleichen, gegebenenfalls mit sich anschließender Zerkleinerung.

6. Zusammensetzung nach einem der vorangehenden Ansprüche, **dadurch gekennzeichnet, daß** die Kaffeeweißerkomponente (B) teilchenförmig, insbesondere kornförmig, vorliegt und/oder aus einzelnen Partikeln besteht, insbesondere in Form eines Pulvers, Granulats oder dergleichen, insbesondere wobei die Teilchengröße der Partikel der Kaffeeweißerkomponente (B) 0,001 bis 5 mm, insbesondere 0,005 bis 2 mm, vorzugsweise 0,01 bis 2 mm, besonders bevorzugt 0,01 bis 1 mm, beträgt.

7. Zusammensetzung nach einem der vorangehenden Ansprüche, **dadurch gekennzeichnet, daß** die Kaffeeweißerkomponente (B) erhältlich ist durch Sprühtrocknung, insbesondere in Gegenwart von Stickstoff und/ oder Kohlendioxid.

8. Zusammensetzung nach einem der vorangehenden Ansprüche, **dadurch** gekenn-. zeichnet, daß die Kaffeeweißerkomponente (B) auf Basis von mindestens einem Protein, vorzugsweise Molkenprotein, mindestens einem Lipid und mindestens einem Träger, vorzugsweise einem Kohlenhydrat, ausgebildet ist und/oder daß die Kaffeeweißerkomponente (B) auf Basis von Molkenpulver, insbesondere Süßmolkenpulver, gegebenenfalls zusammen mit Milchpulver, insbesondere Magermilchpulver, und/oder gegebenenfalls zusammen mit mindestens einem Stabilisator, insbesondere einem Phosphat, ausgebildet ist.

9. Zusammensetzung nach einem der vorangehenden Ansprüche, **dadurch gekennzeichnet, daß** die Kaffeeweißerkomponente (B) außerdem zu Zwecken der Schaumbildung unter Aufbereitung mit vorzugsweise heißem Wasser mindestens ein Gas und/oder einen gasfreisetzenden Bestandteil umfaßt, insbesondere wobei die Kaffeeweißerkomponente (B) mindestens ein Gas, insbesondere Stickstoff und/oder Kohlendioxid, in eingeschlossener und/oder verkapselter Form enthält und/oder insbesondere wobei die Kaffeeweißerkomponente (B) ein vorzugsweise anorganisches Carbonat oder Hydrogencarbonat zusammen mit einem lebensmittelkompatiblen, insbesondere verzehrbaren Säuerungsmittel enthält.

10. Zusammensetzung nach einem der vorangehenden Ansprüche, **dadurch gekennzeichnet, daß** die Zusammensetzung, jeweils bezogen auf die Zusammensetzung, die Kaffeekomponente (A) in Mengen von 0,1 bis 30 Gew.-%, insbesondere 1 bis 20 Gew.-%, vorzugsweise 5 bis 15 Gew.-%, besonders bevorzugt 10 bis 20 Gew.-%, und/oder die Kaffeeweißerkomponente (B) in Mengen von 10 bis 85 Gew.-%, insbesondere 25 bis 75 Gew.-%, vorzugsweise 35 bis 70 Gew.-%, besonders bevorzugt 50 bis 60 Gew.-%, enthält.

11. Zusammensetzung nach einem der vorangehenden Ansprüche, **dadurch gekennzeichnet, daß** die Zusammensetzung außerdem mindestens eine vorzugsweise teilchenförmig ausgebildete Träger- und/oder Süßungskomponente (C) umfaßt, wobei die Träger- und/oder Süßungskomponente (C) mindestens einen Träger-und/oder Süßungsstoff enthält, insbesondere ausgewählt aus der Gruppe von (i) Zuckern, insbesondere Saccharose, Mannose, Maltose, Dextrose, Lactose und Glucose; (ii) Zuckeralkoholen, insbesondere Mannit, Xylit, Sorbit (D-Glucit), Isomaltit (Isomalt), Maltit, Lactit und Galactit; (iii) Zuckerersatzstoffen, insbesondere Zuckeraustauschstoffen, Süßstoffen und Süßungsmittteln; (iv) Stärkederivaten, insbesondere Stärkeabbauprodukten, Dextrinen und Maltodextrinen; sowie deren Mischungen.

12. Zusammensetzung nach Anspruch 11, **dadurch gekennzeichnet, daß** die Träger-und/oder Süßungskomponente (C) teilchenförmig, insbesondere komförmig, vorliegt und/oder aus einzelnen Partikeln besteht, insbesondere in Form eines Pulvers, Granulats oder dergleichen, insbesondere wobei die Teilchengröße der Partikel der Träger- und/oder Süßungskomponente (C) 0,0001 bis 5 mm, insbesondere 0,001 bis 4 mm, vorzugsweise 0,01 bis 3 mm, besonders bevorzugt 0,1 bis 2 mm, beträgt, und/oder die Zusammensetzung die Träger- und/oder Süßungskomponente (C), bezogen auf die Zusammensetzung, in Mengen von 0,001 bis 60 Gew.-%, insbesondere 0,1 bis 50 Gew.-%, vorzugsweise 5 bis 40 Gew.-%, besonders bevorzugt 20 bis 30 Gew.-%, enthält.

13. Kaffeehaltige Instant-Getränkemischung, insbesondere für ein CappuccinoGetränk, enthaltend eine Zusammensetzung, wie in den Ansprüchen 1 bis 12 definiert.

14. Verwendung einer Zusammensetzung nach einem der Ansprüche 1 bis 12 zur Herstellung eines kaffeehaltigen Instant-Getränkes, insbesondere Instant-Cappuccinogetränkes.

15. Verfahren zur Herstellung einer Zusammensetzung nach einem der Ansprüche 1 bis 12, umfassend die folgenden Verfahrensschritte:
(a) Bereitstellung mindestens einer vorzugsweise teilchenförmig ausgebildeten, Instant-Kaffee enthaltenden Kaffeekomponente (A) durch Herstellung einer Instantkaffee-Trockenzusammensetzung, insbesondere in Form eines Instant-Kaffeepulvers oder -granulats, mit an sich bekannten Methoden, gefolgt von einem Verfahrensschritt des Verdichtens der Instantkaffee-Trockenzusammensetzung, gegebenenfalls gefolgt von einem Verfahrensschritt der Zerkleinerung;
(b) Bereitstellung mindestens einer vorzugsweise teilchenförmig ausgebildeten, einen unter Aufbereitung mit vorzugsweise heißem Wasser schaumbildenden Kaffeeweißer (Creamer) enthaltenden Kaffeeweißerkomponente ("Milchschaumkomponente") (B) mit an sich bekannten Methoden;
(c) Mischen der in Schritt (a) erhaltenen Kaffeekomponente (A) mit der in Schritt (b) erhaltenen Kaffeeweißerkomponente ("Milchschaumkomponente") (B),
wobei in Verfahrensschritt (a) die Verdichtung derart durchgeführt wird, daß das Verhältnis von der Schüttdichte der Kaffeekomponente (A) zu der Schüttdichte der Kaffeeweißerkomponente (B) mindestens 1,5 beträgt.

## Claims

1. Composition, in particular for preparing a coffee-containing instant hot drink, preferably in the style of a cappuccino drink, wherein the composition comprises a dry mixture, wherein the dry mixture comprises
(A) at least one preferably particulate coffee component containing instant coffee and
(B) at least one preferably particulate coffee whitener component ("milk foam component") containing a coffee whitener (creamer) that forms foam when prepared with preferably hot water,
wherein the coffee component (A) firstly, and the coffee whitener component (B) secondly have differing water solubilities, in particular water solubilities that are offset in time, wherein the coffee component (A) has a lower water solubility than the coffee whitener component (B), and wherein the coffee component (A) is present in compressed form, wherein the ratio of the bulk density of the coffee component (A) to the bulk density of the coffee whitener component (B) is at least 1.5.

2. Composition according to Claim 1, **characterized in that** the coffee component (A) is present compressed under pressure, compacted, pressed, briquetted or the like, and **in that** the ratio of the bulk density of the coffee component (A) to the bulk density of the coffee whitener component (B) is at least 1.75, preferably at least 2, particularly preferably at least 2.25, very particularly preferably, at least 2.5.

3. Composition according to Claim 1 or 2, **characterized in that** the coffee component (A) has a bulk density of 400 to 1000 g/l, in particular 500 to 900 g/l, preferably 600 to 800 g/l, and/or **in that** the coffee whitener component (B) has a bulk density of 50 to 400 g/l, in particular 75 to 350 g/l, preferably 100 to 300 g/l.

4. Composition according to any one of the preceding claims, **characterized in that** the coffee component (A) is present in particulate form, in particular in grain form, and/or consists of individual particles, in particular in the form of a powder, granules or the like, in particular wherein the particle size of the particles of the coffee component (A) is 0.1 to 10 mm, in particular 4 to 5 mm, preferably 2 to 3 mm.

5. Composition according to any one of the preceding claims, **characterized in that** the coffee component (A) is obtainable via production known per se from instant coffee, in particular by means of spray drying, freeze drying, agglomeration or the like, followed by a compression, preferably compression under pressure, compacting, pressing, briquetting or the like, optionally with subsequent comminution.

6. Composition according to any one of the preceding claims, **characterized in that** the coffee whitener component (B) is particulate, in particular in the form of grains, and/or consists of individual particles, in particular in the form of a powder, granules or the like, in particular wherein the particle size of the particles of the coffee whitener component (B) is 0.001 to 5 mm, in particular 0.005 to 2 mm, preferably 0.01 to 2 mm, particularly preferably 0.01 to 1 mm.

7. Composition according to any one of the preceding claims, **characterized in that** the coffee whitener component (B) is obtainable by spray drying, in particular in the presence of nitrogen and/or carbon dioxide.

8. Composition according to any one of the preceding claims, **characterized in that** the coffee whitener component (B) is made on the basis of at least one protein, preferably a whey protein, at least one lipid and at least one carrier, preferably a carbohydrate, and/or **in that** the coffee whitener component (B) is formed on a basis of whey powder, in particular sweet whey powder, optionally together with milk powder, in particular skimmed milk powder, and/or optionally together with at least one stabilizer, in particular a phosphate.

9. Composition according to any one of the preceding claims, **characterized in that** the coffee whitener component (B) additionally comprises at least one gas and/or a gas-releasing component for purposes of foam formation with preparation using preferably hot water, in particular wherein the coffee whitener component (B) contains at least one gas, in particular nitrogen and/or carbon dioxide, in enclosed and/or encapsulated form and/or in particular wherein the coffee whitener component (B) contains a preferably inorganic carbonate or hydrogencarbonate together with a food-compatible, in particular consumable, acidulant.

10. Composition according to any one of the preceding claims, **characterized in that** the composition contains, in each case based on the composition, the coffee component (A) in amounts of 0.1 to 30 % by weight, in particular 1 to 20 % by weight, preferably 5 to 15 % by weight, particularly preferably 10 to 20 % by weight, and/or the coffee whitener component (B) in amounts of 10 to 85 % by weight, in particular 25 to 75 % by weight, preferably 35 to 70 % by weight, particularly preferably 50 to 60 % by weight.

11. Composition according to any one of the preceding claims, **characterized in that** the composition moreover comprises at least one preferably particulate carrier component and/or sweetening component (C), wherein the carrier component and/or sweetening component (C) contains at least one carrier and/or sweetener, in particular selected from the group of (i) sugars, in particular sucrose, mannose, maltose, dextrose, lactose and glucose; (ii) sugar alcohols, in particular mannitol, xylitol, sorbitol (D-glucitol), isomaltitol (isomalt), maltitol, lactitol and galactitol; (iii) sugar substitutes, in particular sugar replacers, sweeteners and sweetening agents; (iv) starch derivatives, in particular starch breakdown products, dextrins and maltodextrins; and also mixtures thereof.

12. Composition according to Claim 11, **characterized in that** the carrier component and/or sweetening component (C) is particulate, in particular grain-type, and/or consists of individual particles, in particular in the form of a powder, granules or the like, in particular wherein the particle size of the particles of the carrier component and/or sweetening component (C) is 0.0001 to 5 mm, in particular 0.001 to 4 mm, preferably 0.01 to 3 mm, particularly preferably 0.1 to 2 mm, and/or the composition contains the carrier component and/or sweetening component (C), based on the composition, in amounts of 0.001 to 60 % by weight, in particular 0.1 to 50 % by weight, preferably 5 to 40 % by weight, particularly preferably 20 to 30 % by weight.

13. Coffee-containing instant drink mixture, in particular for a cappuccino drink, containing a composition as defined in Claims 1 to 12.

14. Use of a composition according to any one of Claims 1 to 12 for producing a coffee-containing instant drink, in particular instant cappuccino drink.

15. Process for producing a composition according to any one of Claims 1 to 12, comprising the following process steps:
(a) providing at least one preferably particulate instant coffee-containing coffee component (A) by producing an instant coffee dry composition, in particular in the form of an instant coffee powder or instant coffee granules using methods known per se, followed by a process step of compressing the instant coffee dry composition, optionally followed by a process step of comminution;
(b) providing at least one preferably particulate coffee whitener component ("milk foam component") (B) that contains a coffee whitener (creamer) that forms foam when prepared with preferably hot water, using methods known per se;
(c) mixing the coffee component (A) obtained in step (a) with the coffee whitener component ("milk foam component") (B) obtained in step (b),
wherein, in process step (a), the compression is carried out in such a manner that the ratio of the bulk density of the coffee component (A) to the bulk density of the coffee whitener component (B) is at least 1.5.

## Revendications

1. Composition, en particulier pour la préparation d'une boisson chaude instantanée contenant du café, de préférence à la manière d'un cappuccino, dans laquelle la composition comprend un mélange en poudre, dans laquelle le mélange en poudre comprend
(A) au moins un composant de café de préférence sous la forme de particules, contenant du café instantané, et
(B) au moins un composant de blanchiment du café ("composant de moussage du lait") de préférence sous la forme de particules, contenant un produit de blanchiment du café (creamer) moussant lors de la préparation avec de l'eau de préférence chaude,
dans laquelle le composant de café (A) d'une part et le composant de blanchiment du café (B) d'autre part présentent des solubilités dans l'eau différentes, en particulier décalées dans le temps, dans laquelle le composant de café (A) présente une solubilité dans l'eau plus faible que le composant de blanchiment du café (B), et
dans laquelle le composant de café (A) se présente sous forme comprimée, dans laquelle le rapport de la densité en vrac du composant de café (A) à la densité en vrac du composant de blanchiment du café (B) vaut au moins 1,5.

2. Composition selon la revendication 1, **caractérisée en ce que** le composant de café (A) se présente sous une forme comprimée, compactée, pressée, briquetée ou analogue et **en ce que** le rapport de la densité en vrac du composant de café (A) à la densité en vrac du composé de blanchiment du café (B) vaut au moins 1,75, de préférence au moins 2, de préférence encore au moins 2,25 et de préférence enfin au moins 2,5.

3. Composition selon la revendication 1 ou 2, **caractérisée en ce que** le composant de café (A) présente une densité en vrac de 400 à 1 000 g/l, en particulier de 500 à 900 g/l, de préférence de 600 à 800 g/l et/ou **en ce que** le composant de blanchiment du café (B) présente une densité en vrac de 50 à 400 g/l, en particulier de 75 à 350 g/l, de préférence de 100 à 300 g/l.

4. Composition selon l'une quelconque des revendications précédentes, **caractérisée en ce que** le composant de café (A) se présente sous la forme de particules, en particulier sous la forme de grains, et/ou se compose de particules individuelles, en particulier sous la forme d'une poudre, d'un granulat ou analogue, en particulier dans laquelle la granulométrie des particules du composant de café (A) vaut 0,1 à 10 mm, en particulier 4 à 5 mm, de préférence 2 à 3 mm.

5. Composition selon l'une quelconque des revendications précédentes, **caractérisée en ce que** le composant de café (A) peut être obtenu par la production connue en soi de café instantané, en particulier par séchage par pulvérisation, par lyophilisation, par agglomération ou analogue, suivi d'une compression, de préférence d'une compression sous pression, d'un compactage, d'un pressage, d'un briquetage ou analogue, le cas échéant avec un broyage ultérieur.

6. Composition selon l'une quelconque des revendications précédentes, **caractérisée en ce que** le composant de blanchiment du café (B) se présente sous la forme de particules, en particulier sous la forme de grains, et/ou se compose de particules individuelles, en particulier sous la forme d'une poudre, d'un granulat ou analogue, en particulier dans laquelle la granulométrie des particules du composant de blanchiment du café (B) vaut 0,001 à 5 mm, en particulier 0,005 à 2 mm, de préférence 0,01 à 2 mm, de préférence encore 0,01 à 1 mm.

7. Composition selon l'une quelconque des revendications précédentes, **caractérisée en ce que** le composant de blanchiment du café (B) peut être obtenu par séchage par pulvérisation, en particulier en présence d'azote et/ou de dioxyde de carbone.

8. Composition selon l'une quelconque des revendications précédentes, **caractérisée en ce que** le composant de blanchiment du café (B) est réalisé à base d'au moins une protéine, de préférence une protéine de lactosérum, d'au moins un lipide et d'au moins un porteur, de préférence un hydrate de carbone, et/ou **en ce que** le composant de blanchiment du café (B) est réalisé à base de lactosérum en poudre, en particulier de poudre de lactosérum doux, le cas échéant avec du lait en poudre, en particulier du lait écrémé en poudre, et/ou le cas échéant avec au moins un stabilisant, en particulier un phosphate.

9. Composition selon l'une quelconque des revendications précédentes, **caractérisée en ce que** le composant de blanchiment du café (B) comprend par ailleurs, pour la formation de mousse par préparation avec de l'eau de préférence chaude, au moins un gaz et/ou un ingrédient libérant du gaz, en particulier dans lequel le composant de blanchiment du café (B) contient au moins un gaz, en particulier de l'azote et/ou du dioxyde de carbone, sous une forme enfermée et/ou encapsulée et/ou dans lequel le composant de blanchiment du café (B) contient un carbonate ou un bicarbonate de préférence minéral avec un agent acidifiant compatible avec les denrées alimentaires, en particulier propre à la consommation.

10. Composition selon l'une quelconque des revendications précédentes, **caractérisée en ce que** la composition, chaque fois rapportée à la composition, contient le composant de café (A) en des quantités de 0,1 à 30 % en poids, en particulier 1 à 20 % en poids, de préférence 5 à 15 % en poids, de préférence encore 10 à 20 % en poids, et/ou le composant de blanchiment du café (B) en des quantités de 10 à 85 % en poids, en particulier 25 à 75 % en poids, de préférence 35 à 70 % en poids, et de préférence encore 50 à 60 % en poids.

11. Composition selon l'une quelconque des revendications précédentes, **caractérisée en ce que** la composition comprend par ailleurs au moins un composant porteur et/ou édulcorant (C) réalisé de préférence sous la forme de particules, dans laquelle le composant port et/ou édulcorant (C) contient au moins une substance porteuse et/ou édulcorante, en particulier sélectionnée dans le groupe de (i) sucres, en particulier saccharose, mannose, maltose, dextrose, lactose et glucose; (ii) polyols, en particulier mannite, xylite, sorbite (D-glucite), isomaltite (isomalt), maltite, lactite et galactite; (iii) édulcorants, en particulier substituts du sucre, saccharines et agents d'adoucissement; (iv) dérivés de l'amidon, en particulier produits de la dégradation de l'amidon, dextrines et maltodextrines; ainsi que leurs mélanges.

12. Composition selon la revendication 11, **caractérisée en ce que** le composant porteur et/ou édulcorant (C) se présente sous la forme de particules, en particulier sous la forme de grains, et/ou se compose de particules individuelles, en particulier sous la forme d'une poudre, d'un granulat ou analogue, en particulier dans laquelle la granulométrie des particules du composant porteur et/ou édulcorant (C) vaut 0,0001 à 5 mm, en particulier 0,001 à 4 mm, de préférence 0,01 à 3 mm, de préférence encore 0,1 à 2 mm, et/ou la composition, rapportée à la composition, contient le composant porteur et/ou édulcorant (C) en des quantités de 0,001 à 60 % en poids, en particulier 0,1 à 50 % en poids, de préférence 5 à 40 % en poids, et de préférence encore 20 à 30 % en poids.

13. Boisson instantanée contenant du café, en particulier pour un cappuccino, contenant une composition selon l'une quelconque des revendications 1 à 12.

14. Utilisation d'une composition selon l'une quelconque des revendications 1 à 12 pour la préparation d'une boisson instantanée contenant du café, en particulier d'un cappuccino instantané.

15. Procédé de production d'une composition selon l'une quelconque des revendications 1 à 12, comprenant les étapes suivantes:
(a) préparation d'au moins un composant de café (A) contenant du café instantané de préférence sous la forme de particules par production d'une composition sèche de café instantané, en particulier sous la forme d'une poudre ou d'un granulat de café instantané, avec des méthodes connues en soi, suivie d'une étape de compression de la composition sèche de café instantané, éventuellement suivie d'une étape de broyage;
(b) préparation d'au moins un composant de blanchiment du café (B) ("composant de moussage du lait") contenant un produit de blanchiment du café (creamer) de préférence sous la forme de particules, moussant lors de la préparation avec de l'eau de préférence chaude, avec des méthodes connues en soi;
(c) mélange du composant de café (A) obtenu à l'étape (a) avec le composant de blanchiment du café (B) ("composant de moussage du lait") obtenu à l'étape (b),
dans lequel la compression est exécutée, à l'étape (a), de telle manière que le rapport de la densité en vrac du composant de café (A) à la densité en vrac du composant de blanchiment du café (B) soit au moins égal à 1,5.
